# EUROPÄISCHE PATENTSCHRIFT

(11) **EP 1 286 401 B1**
(45) Veröffentlichungstag und Bekanntmachung des Hinweises auf die Patenterteilung: **13.06.2007**
(21) Anmeldenummer: 02009204.5
(22) Anmeldetag: 24.04.2002
(51) Int. Cl.: H01L 31/042, E04D 13/16

(54) **Montagesystem für gerahmte Solarmodule**
Mounting system for framed solar modules
Système de montage pour modules solaires encadrés

(30) Priorität: 25.06.2001 DE 20110459 U
(43) Veröffentlichungstag der Anmeldung: 26.02.2003
(73) Patentinhaber: Osmer, Klaus-Dieter, 28865 Lilienthal (DE)
(72) Erfinder: Osmer, Klaus-Dieter, 28865 Lilienthal (DE)
(74) Vertreter: Goddar, Heinz J.

(56) Entgegenhaltungen:
- EP-A2- 0 977 274
- EP-A2- 1 006 592
- EP-A2- 1 039 550
- US-A- 5 986 203

## Beschreibung

Die vorliegende Erfindung betrifft ein Montagesystem für gerahmte Solarmodule mit mindestens zwei sich horizontal erstreckenden, parallel zueinander angeordneten Halteprofilen zum Halten mindestens eines Solarmoduls und mit Befestigungsmitteln zur Befestigung der Halteprofile auf einem Dach oder an einer Fassade, wobei jedes Halteprofil zwei in entgegengesetzten Richtungen offene Aufnahmetaschen aufweist, die zur Aufnahme je einer Kante des mindestens einen Solarmoduls geeignet sind. Dokument EP-A-1006592 beschreibt ein Montagesystem für gerahmte Solarmodule.

Dieses gattungsgemäße Montagesystem weist den Nachteil auf, daß es nur jeweils für eine bestimmte Rahmenhöhe eines Solarmoduls eingesetzt werden kann.

Der Erfindung liegt somit die Aufgabe zugrunde, das gattungsgemäße Montagesystem dergestalt weiterzuentwickeln, daß es über einen Bereich von Abmessungen von Solarmodulen einsetzbar ist.

Erfindungsgemäß wird diese Aufgabe bei dem gattungsgemäßen Montagesystem dadurch gelöst, daß jedes Halteprofil gestaltet ist, um in jeder Aufnahmetasche bedarfsweise die ortsfeste Anordnung einer Distanzbrücke zur Anpassung an die Rahmenhöhe des jeweiligen Solarmoduls zu ermöglichen.

Günstigerweise ist jedes Halteprofil im Querschnitt im wesentlichen I-förmig gestaltet, wobei die zur Befestigung des Halteprofils vorgesehenen Schenkel des I länger als die an dem anderen Ende des Stegs befindlichen Schenkel sind.

Vorteilhafterweise ist der Steg im Bereich seines von der Befestigungsseite abgewandten Endes geschwächt. Damit läßt sich ein einfacheres Einschieben und Klemmen einer Kante eines Solarmoduls erreichen.

Zweckmäßigerweise weist der Steg zwischen den Schenkeln des I zu beiden Aufnahmetaschen hin je zwei in seiner Längserstreckung beabstandete Vorsprünge auf, zwischen denen eine jeweilige Distanzbrücke positionierbar ist.

Gemäß einer weiteren besonderen Ausführungsform der Erfindung kann vorgesehen sein, daß jedes Paar von sich gegenüberliegenden Schenkeln des I zum Einschieben einer Einschubblende in Längserstreckung des jeweiligen Halteprofils gestaltet ist. Durch die Einschubblende läßt sich ein ansprechenderer ästhetischer Eindruck erzielen, da dadurch Befestigungselemente, wie z. B. Schrauben, nicht sichtbar werden. Darüberhinaus kann mittels der Einschubblende auch Werbung im Bereich der Solarmodule angebracht werden, indem die Einschubblenden mit Werbeaufschriften etc. versehen sind.

Andererseits kann auch vorgesehen sein, daß jedes Paar von sich gegenüberliegenden Schenkeln des I zum Einrasten einer Rastblende in Längserstreckung des jeweiligen Halteprofils gestaltet ist. Der Raum hinter der Einschub- bzw. Rastblende kann auch als ein Kabelkanal verwendet werden.

Günstigerweise sind die im Querschnitt äußeren Enden der längeren Schenkel des I zur Aufnahme einer Distanzbrücke zur Anpassung an die Rahmenhöhe des jeweiligen Solarmoduls gestaltet.

Zweckmäßigerweise sind mindestens zwei Distanzbrücken zur Anpassung an die Rahmenlänge bzw. -breite je Solarmodul vorgesehen.

Insbesondere kann dabei vorgesehen sein, daß die Distanzbrücken einen rechteckigen Querschnitt aufweisen.

Vorteilhafterweise sind die Distanzbrücken zur Anpassung an zwei unterschiedliche Rahmenlängen bzw. -breiten von Solarmodulen vorgesehen. Dann ist nur eine einzige Distanzbrücke erforderlich, um eine Anpassung an zwei unterschiedliche Rahmenlängen bzw. -breiten vorzunehmen.

Gemäß einer besonderen Ausführungsform der Erfindung kann vorgesehen sein, daß die Distanzbrücken in zwei zueinander spiegelbildlichen Anordnungen an dem jeweiligen Halteprofil anbringbar sind. Dabei dient dann jede der zwei spiegelbildlichen Anordnungen zur Anpassung an eine jeweilige Rahmenlänge bzw. -breite.

Außerdem kann vorgesehen sein, daß die Distanzbrücken aus Kunststoff sind.

Alternativ kann vorgesehen sein, daß die Distanzbrücken aus Aluminium sind.

Insbesondere kann vorgesehen sein, daß die Distanzbrücken aus Strangpreßprofilen hergestellt sind.

Gemäß einer weiteren besonderen Ausführungsform der Erfindung kann vorgesehen sein, daß mindestens zwei Distanzbrücken zur Anpassung an die Rahmenhöhe je Solarmodul vorgesehen sind.

Vorteilhafterweise sind die Distanzbrücken zur Anpassung an die Rahmenhöhe aufclipsbar.

Vorteilhafterweise weisen die Distanzbrücken einen U-förmigen Bereich auf, wobei die offene Seite des U-förmigen Bereiches bei eingesetztem Solarmodul selbigem zugewandt ist. Dies ermöglicht es, daß die äußeren Schenkel des U-förmigen Bereiches zur Anpassung an eine größere Rahmenhöhe z. B. durch Sägen verkürzt werden können.

Weiterhin kann dabei vorgesehen sein, daß die Distanzbrücken zur Anpassung an die Rahmenhöhe aus Kunststoff sind.

Zweckmäßigerweise sind die Distanzbrücken zur Anpassung an die Rahmenhöhe aus Aluminium. Insbesondere kann dabei kann vorgesehen sein, daß die Distanzbrücken zur Anpassung an die Rahmenhöhe aus Strangpreßprofilen hergestellt sind.

Günstigerweise sind für jedes Halteprofil zwei seitliche Endkappen vorgesehen sind, die lösbar mit dem jeweiligen Halteprofil verbindbar sind. Dadurch wird zum einen ein seitlicher Halt des eingesetzten Solarmoduls und zum anderen ein schönerer ästhetischer Gesamteindruck erzielt.

Vorteilhafterweise sind die Halteprofile in deren Längserstreckung mittels Verbindungsbolzen zu beiden Seiten verlängerbar.

Zweckmäßigerweise bestehen die Halteprofile aus Aluminium.

Gemäß einer weiteren besonderen Ausführungsform der Erfindung kann vorgesehen sein, daß die Befestigungsmittel vertikale Profile umfassen. Die vertikalen Profile können beispielsweise zur Befestigung auf einem Schrägdach oder an einer Fassade dienen.

Günstigerweise ist jedes vertikale Profil als Aufnahmeprofil für ein jeweiliges Halteprofil mit mindestens einer integrierten Kabelrinne ausgebildet. Dadurch scheuern in der bzw. den Kabelrinne(n) aufgenommene Kabel nicht auf den Dachpfannen. Hierdurch ergibt sich eine geschützte sichere Kabelverlegung.

Schließlich kann alternativ vorgesehen sein, daß die Befestigungsmittel einen Dreieckrahmen umfassen. Der Dreieckrahmen dient dabei zur Befestigung auf einem Flachdach.

Der Erfindung liegt die überraschende Erkenntnis zugrunde, daß durch die Gestaltung der Halteprofile zur Anordnung von Distanzbrücken und durch das Vorsehen von Distanzbrücken eine Anpassbarkeit des Montagesystems an unterschiedliche Solarmodule bereitgestellt wird.

Weitere Merkmale und Vorteile der Erfindung ergeben sich aus den Ansprüchen und aus der nachstehenden Beschreibung, in der mehrere Ausführungsbeispiele anhand der schematischen Zeichnungen im einzelnen erläutert sind. Dabei zeigt:
- Figur 1: schematisch ein Montagesystem für gerahmte Solarmodule gemäß einer besonderen Ausführungsform der Erfindung auf einem Schrägdach;
- Figur 2: schematisch ein Montagesystem für gerahmte Solarmodule gemäß einer weiteren besonderen Ausführungsform der Erfindung zur Verwendung auf einem Flachdach;
- Figur 3: schematisch ein Montagesystem für gerahmte Solarmodule gemäß einer weiteren besonderen Ausführungsform der Erfindung an einer Fassade;
- Figur 4: eine Schnittansicht eines Halteprofils gemäß einer besonderen Ausführungsform der Erfindung in Einzeldarstellung;
- Figur 5: eine Seitenansicht des Halteprofils von Figur 4 im befestigten Zustand und mit eingebauter Distanzbrücke zur Anpassung an die Rahmenlänge bzw. -breite eines Solarmoduls;
- Figur 6: das Einschieben der oberen Kante eines Solarmoduls in ein die Komponenten von Figur 5 umfassendes Montagesystem;
- Figur 7: das Auflegen des Solarmoduls von Figur 6;
- Figur 8: das Einschieben der unteren Kante des Solarmoduls von Figur 6;
- Figur 9: eine Seitenansicht eines Halteprofils mit eingeschobener Einschubblende und aufgeclipster Distanzbrücke zur Anpassung an die Rahmenhöhe eines Solarmoduls gemäß einer besonderen Ausführungsform der vorliegenden Erfindung;
- Figur 10: eine Seitenansicht des Halteprofils von Figur 9 im befestigten Zustand;
- Figur 11: eine Einschubblende, die gerade in Längserstreckung eines Halteprofils eingeschoben wird;
- Figur 12: eine seitliche Endkappe, die gerade mittels Schrauben an einem Halteprofil befestigt wird;
- Figur 13: eine Seitenansicht eines vertikalen Profils gemäß einer besonderen Ausführungsform der Erfindung;
- Figur 14: eine Ansicht wie Figur 7 eines Montagesystems gemäß einer weiteren besonderen Ausführungsform der Erfindung;
- Figur 15: eine Ansicht wie Figur 14, wobei jedoch Solarmodule mit anderen Abmessungen eingesetzt sind;
- Figur 16: eine Seitenansicht einer Distanzbrücke zur Anpassung an die Rahmenlänge bzw. -breite eines Solarmoduls gemäß einer weiteren besonderen Ausführungsform der vorliegenden Erfindung; und
- Figur 17: eine Seitenansicht einer Distanzbrücke zur Anpassung an die Rahmenhöhe eines Solarmoduls gemäß einer weiteren besonderen Ausführungsform der vorliegenden Erfindung.

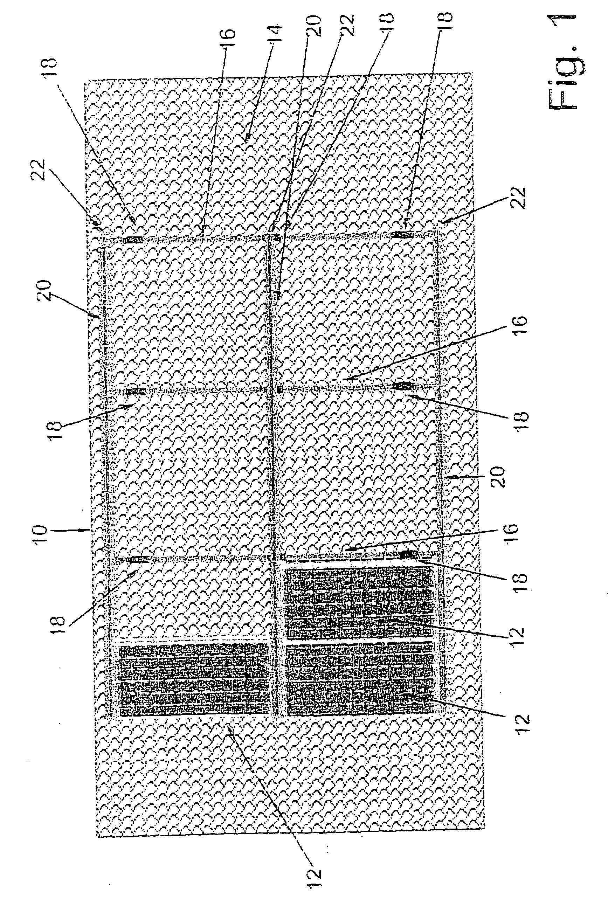

Figur 1 zeigt schematisch ein Montagesystem 10 für gerahmte Solarmodule 12 gemäß einer besonderen Ausführungsform der Erfindung auf einem Schrägdach 14. Das Montagesystem 10 umfaßt vertikale Profile 16, die mittels Dachhaken 18 an dem Schrägdach 14 befestigt sind. Auf den vertikalen Profilen 16 sind quer dazu Halteprofile 20 mittels Schrauben (nicht gezeigt) befestigt. In Längserstreckung der Halteprofile 20 sind Einschubblenden 22 eingeschoben.

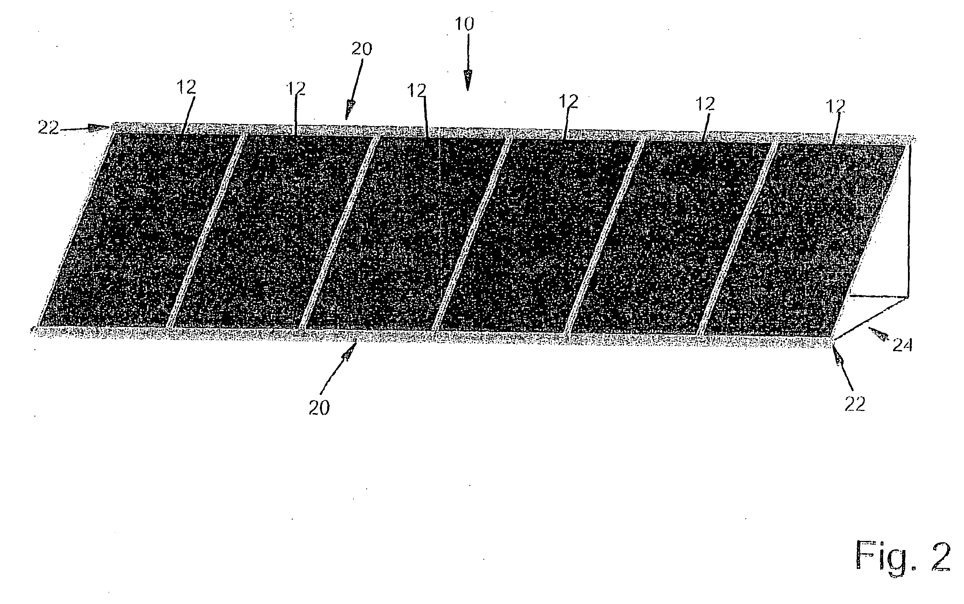

Figur 2 zeigt schematisch ein Montagesystem 10 für gerahmte Solarmodule 12 gemäß einer weiteren besonderen Ausführungsform der Erfindung zur Verwendung auf einem Flachdach (nicht gezeigt). Mittels Halteprofile 20 werden die Solarmodule 12 auf einem Dreieckrahmen 24 gehalten. Jedes Halteprofil 20 ist wiederum mit einer Einschubblende 22 versehen.

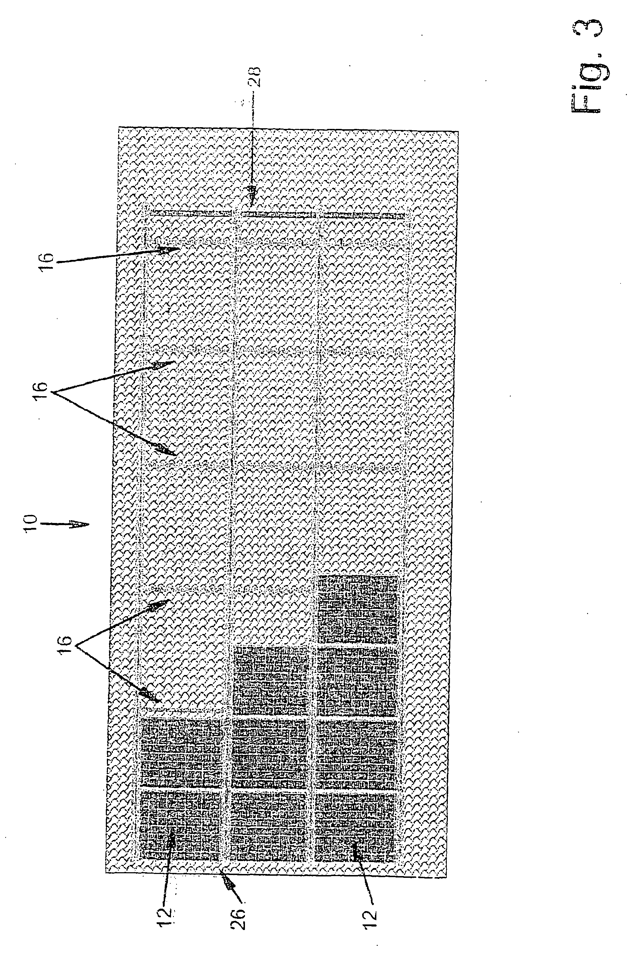

Figur 3 zeigt schematisch ein Montagesystem 10 für gerahmte Solarmodule 12 (von denen nur zwei gekennzeichnet sind) gemäß einer weiteren besonderen Ausführungsform der Erfindung an einer Fassade 26. Das Montagesystem 10 umfaßt vertikale Profile 16, die an der Fassade 26 befestigt sind, und auf den vertikalen Profilen 16 quer dazu verlaufende Halteprofile 20, die an den vertikalen Profilen 16 mittels Schrauben (nicht gezeigt) befestigt sind. Auf der rechten Seite ist zusätzlich eine Vertikalblende 28 vorgesehen. Bei den Solarmodulen handelt es sich um Dünnschicht-Module.

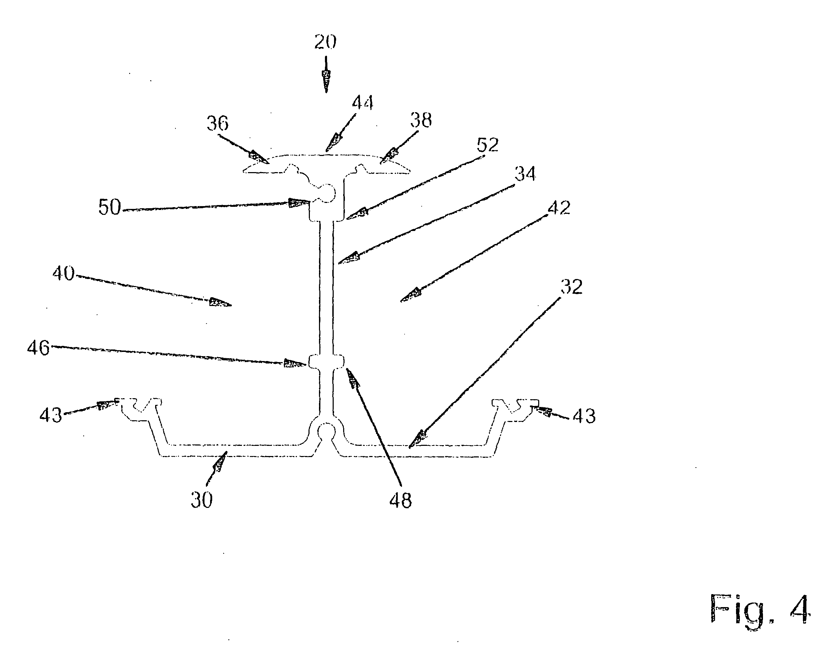

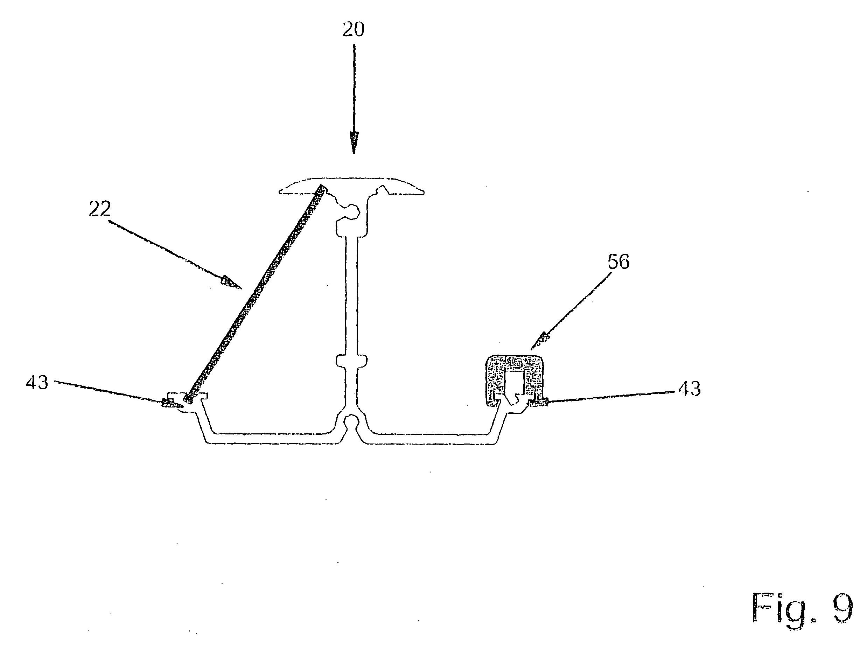

Figur 4 zeigt eine Schnittansicht eines Halteprofils 20 gemäß einer besonderen Ausführungsform der Erfindung in Einzeldarstellung. Das Halteprofil 20 ist im Querschnitt im wesentlichen I-förmig gestaltet, wobei die zur Befestigung des Halteprofils vorgesehenen Schenkel 30 und 32 des I länger als die an dem anderen Ende 44 des Stegs 34 befindlichen Schenkel 36, 38 sind. Durch seine Gestaltung liefert das Halteprofil zwei in entgegengesetzte Richtungen offene Aufnahmetaschen 40 und 42. Der Steg 34 ist im Bereich seines von der Befestigungsseite abgewandten Endes 44 geschwächt und weist zwischen den Schenkeln 30, 32, 36, 38 des I zu beiden Aufnahmetaschen 40 und 42 hin je zwei in seiner Längserstreckung beabstandete Vorsprünge 46, 50 bzw. 48, 52 auf, zwischen denen eine jeweilige Distanzbrücke (nicht gezeigt) positionierbar ist. Jedes Paar von sich gegenüberliegenden Schenkeln 30 und 36 sowie 32 und 38 des I ist zum Einschieben einer Einschubblende (nicht gezeigt) in Längserstreckung des Halteprofils 20 gestaltet (siehe Figur 9). Die Enden 43, 43 der Schenkel 30 und 32 sind zum Aufclipsen von Distanzbrücken zur Anpassung an die Rahmenhöhe eines Solarmoduls gestaltet (siehe Figur 9).

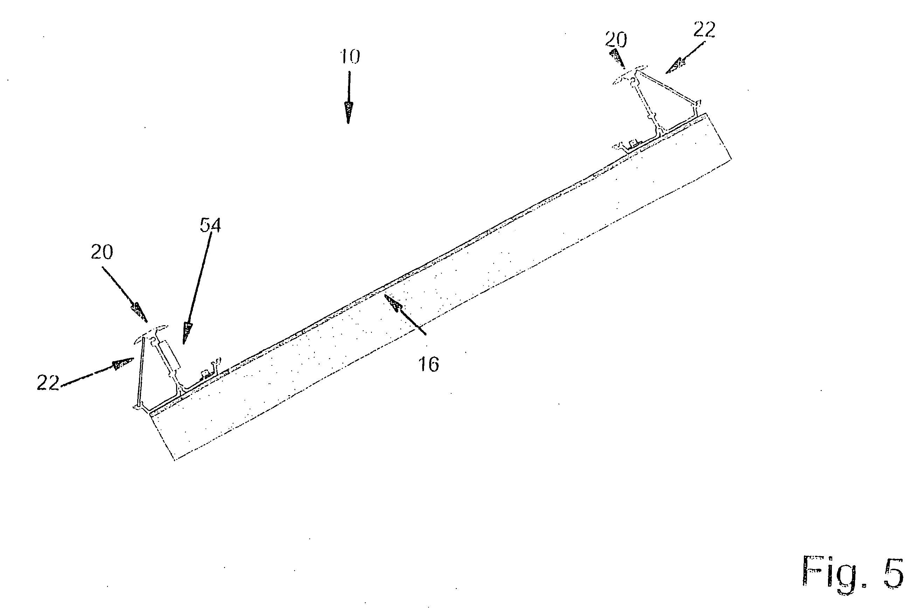

Figur 5 zeigt eine Seitenansicht des Halteprofils 20 von Figur 4 im an einem vertikalen Profil 16 befestigten Zustand und mit eingebauter Distanzbrücke 54 zur Anpassung an die Rahmenlänge bzw. -breite eines Solarmoduls (nicht gezeigt). Ein weiteres Halteprofil 20 ist in Figur 5 oben rechts eingezeichnet. In beide Halteprofile 20 ist jeweils eine Einschubblende 22, aber auf entgegengesetzten Seiten eingeschoben.

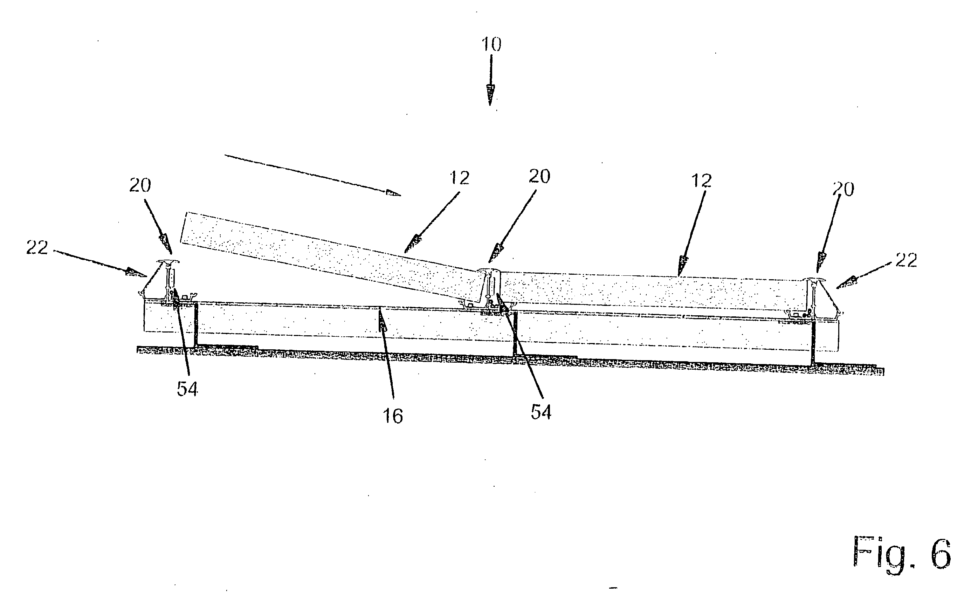

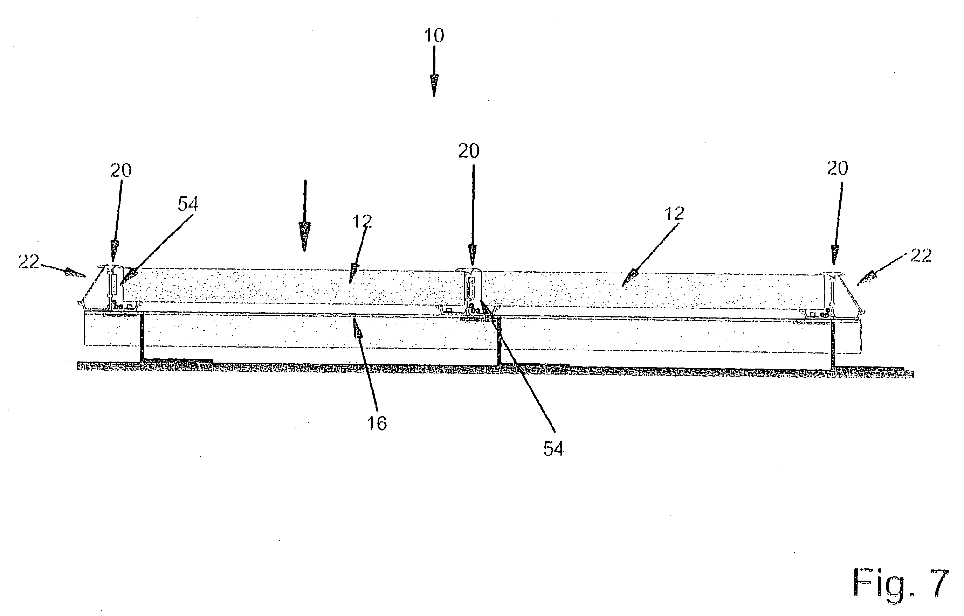

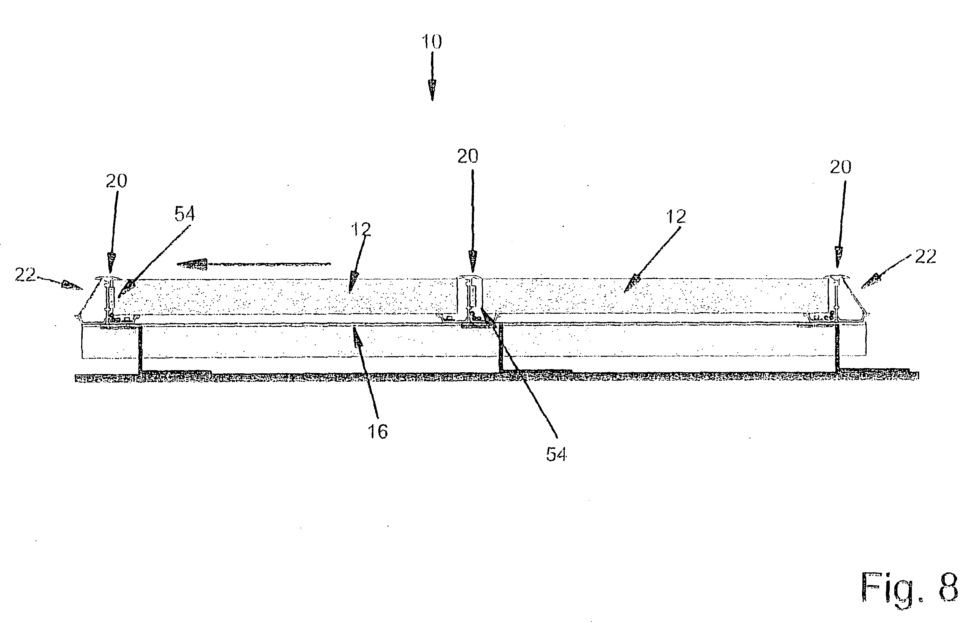

Figur 6 zeigt das Einschieben der oberen Kante eines Solarmoduls 12 in ein die Komponenten von Figur 5 umfassendes Montagesystem 10. Nachfolgend wird das Solarmodul 12 aufgelegt (siehe Figur 7). Schließlich wird das Solarmodul 12 durch Einschieben seiner unteren Kante auf beiden Seite in einem jeweiligen Halteprofil 20 geklemmt (siehe Figur 8).

Figur 9 zeigt eine Seitenansicht eines Halteprofils 20 mit eingeschobener Einschubblende 22 und aufgeclipster Distanzbrücke 56 zur Anpassung an die Rahmenhöhe eines jeweiligen Solarmoduls (nicht gezeigt) gemäß einer besonderen Ausführungsform der vorliegenden Erfindung.

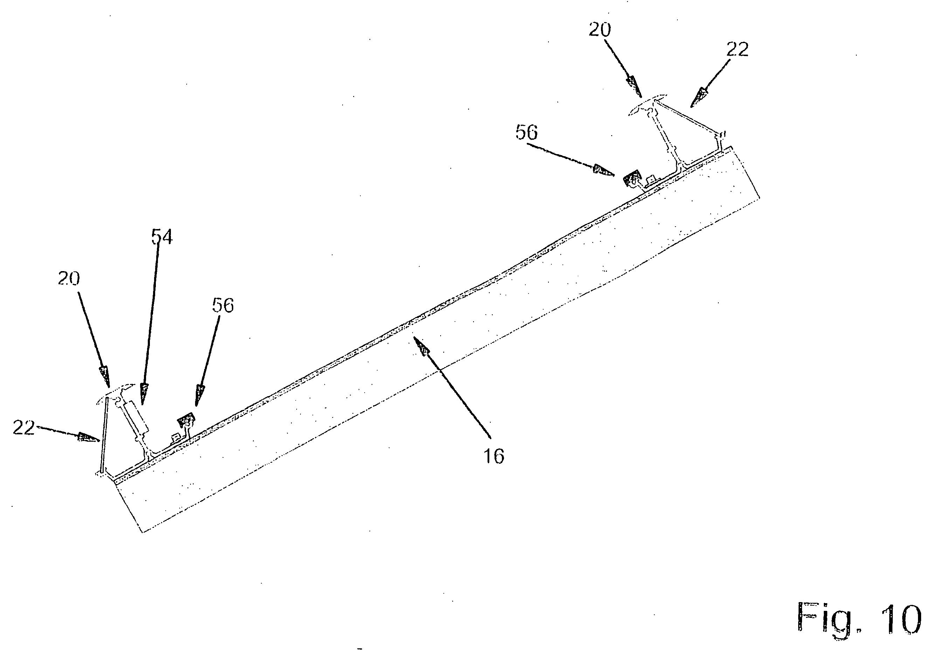

Figur 10 zeigt eine Seitenansicht des Halteprofils von Figur 9 im an einem vertikalen Profil 16 befestigten Zustand, wobei zusätzlich eine Distanzbrücke 54 zur Anpassung an die Rahmenlänge bzw. -breite eines Solarmoduls (nicht gezeigt) vorgesehen ist. Das Halteprofil 20 eignet sich zusammen mit den Distanzbrücken 54 und 56 zur Aufnahme von Solarmodulen mit einer Rahmenhöhe bis 50 mm gleich welcher Längen- und Breitenabmessungen und Hersteller.

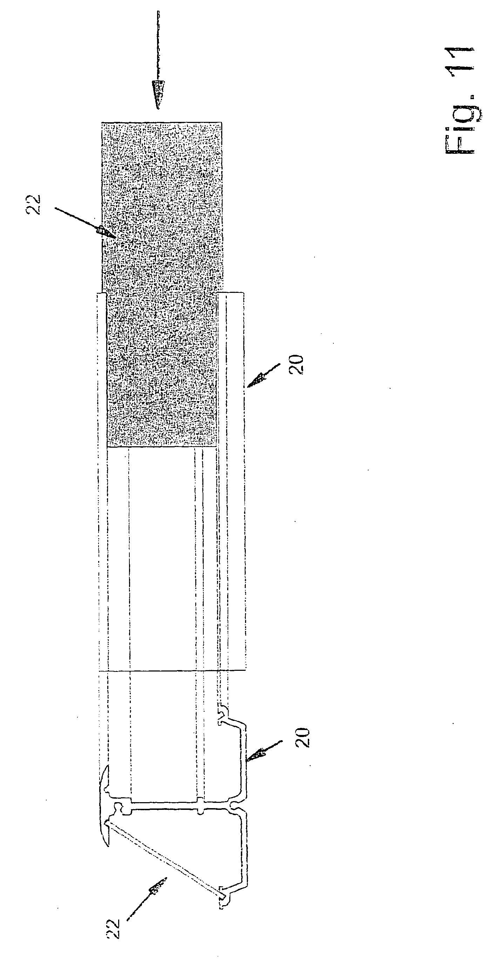

Figur 11 zeigt eine Einschubblende 22, die gerade in Längserstreckung eines Halteprofils 20 eingeschoben wird, in Draufsicht und in Schnittansicht (links).

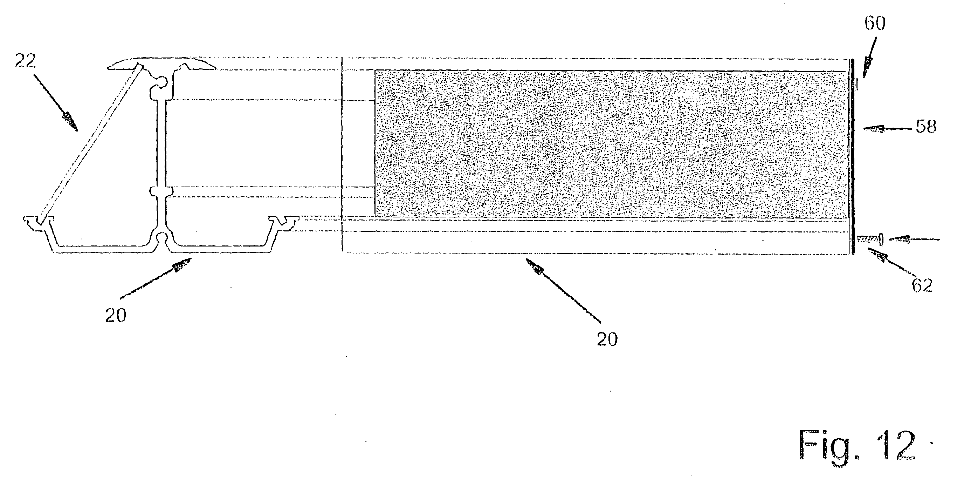

Schließlich ergibt sich aus Figur 12, die eine Draufsicht und eine Schnittansicht (links) zeigt, wie eine seitliche Endkappe 58 mittels Schrauben 60, 62 an einem Halteprofil 20 befestigt werden. Die Endkappe 58 dient dabei zum Halten eines Solarmoduls (nicht gezeigt) und einer Einschubblende 22 sowie zur Verschönerung des ästhetischen Eindrucks.

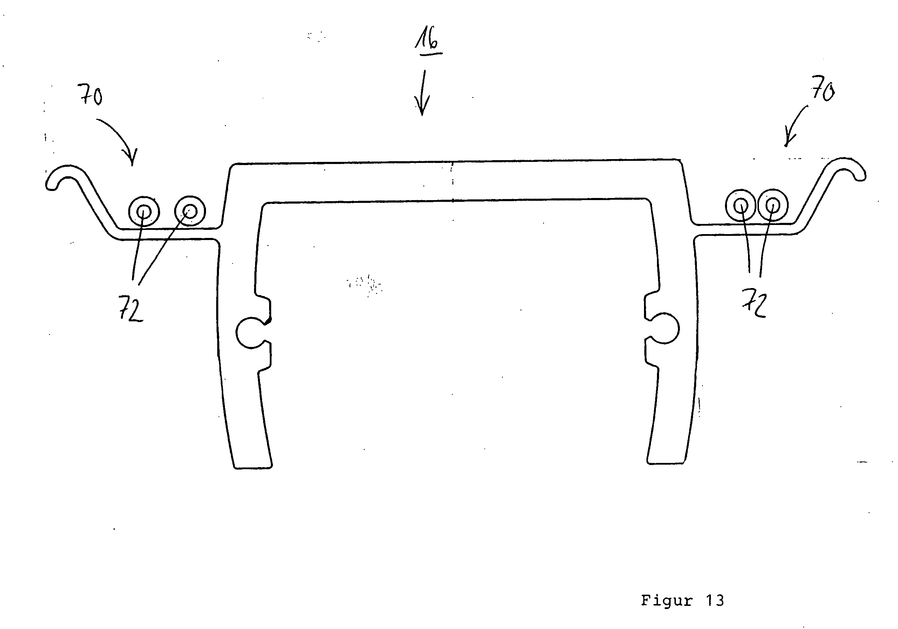

Figur 13 zeigt eine Seitenansicht eines vertikalen Profils 16 gemäß einer besonderen Ausführungsform der Erfindung. Das vertikale Profil 16 weist zu beiden Seiten jeweils eine integrierte Kabelrinne 70 auf, in denen sich jeweils zwei Kabel 72 befinden. Auf diesem vertikalen Profil 16 werden sich dazu quer erstreckende Halteprofile (nicht gezeigt) befestigt.

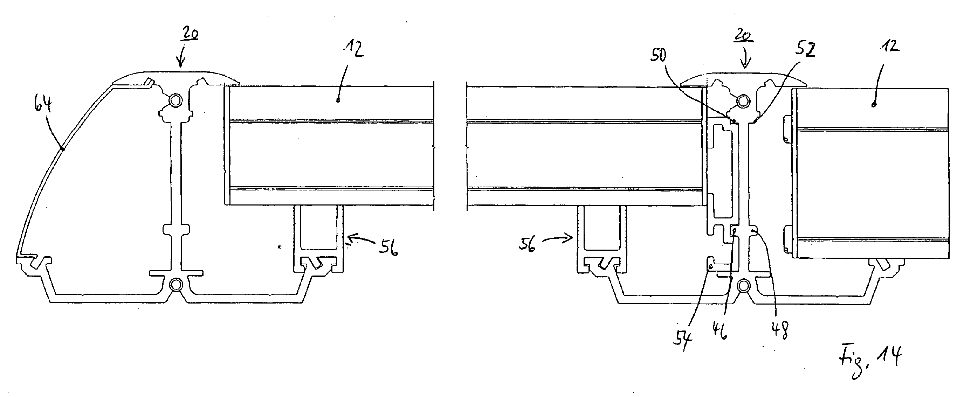

Figur 14 zeigt eine Ansicht wie Figur 7 eines Montagesystems gemäß einer weiteren besonderen Ausführungsform der Erfindung. Durch Aufklippsen von Distanzbrücken 56 zur Anpassung an die Rahmenhöhe des Solarmoduls 12 und Anbringen von Distanzbrücken 54 zur Anpassung an die Rahmenlänge bzw. -breite des Solarmoduls 12 kann der in der Figur 14 in der Mitte gezeigte Solarmodultyp montiert werden.

Darüber hinaus ist in der Figur 14 eine Rastblende 64 mit einer gewölbten Konfiguration gezeigt.

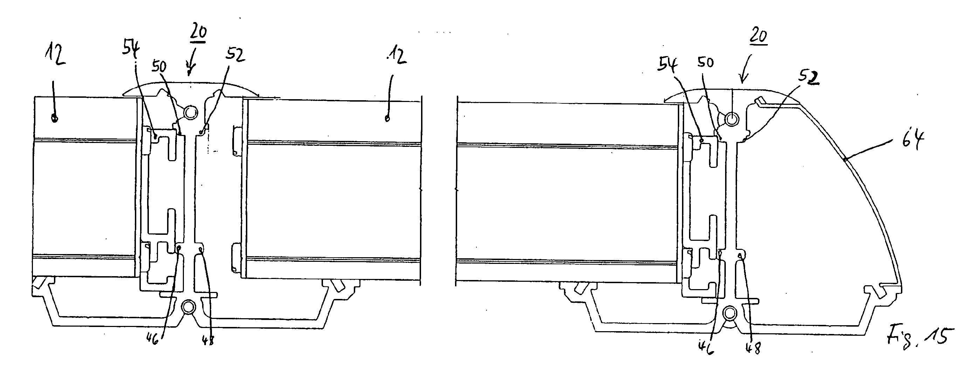

Figur 15 zeigt, wie das Montagesystem von Figur 14 abgewandelt werden kann, um ein anderen Typ von Solarmodul 12 zu montieren. Zunächst einmal sind die Distanzbrücken 56 weggelassen, damit das Solarmodul 12 trotz seiner Rahmenhöhe in die Halteprofile 20 paßt. Außerdem sind die Distanzbrücken 54 in einer zu der in Figur 14 gezeigten spiegelbildlichen Anordnung angeordnet. Da dann die Distanzbrücken 54 nicht mehr formschlüssig in die durch die Vorsprünge 46 und 50 bzw. 48 und 52 gebildeten Aussparungen passen, stehen sie weiter von den Halteprofilen 20 ab, wodurch nur noch Solarmodule 12 mit geringeren Rahmenlängen bzw. -breiten eingesetzt werden können.

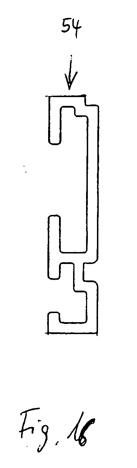

Figur 16 zeigt die Distanzbrücke 54 noch einmal in Einzeldarstellung. Deutlich ist zu erkennen, daß die dort rechts gezeigte Seite derart gestaltet ist, daß sie formschlüssig mit dem Halteprofil 20 zusammenpaßt, wie es in Figur 14 gezeigt ist, während, wenn die Distanzbrücke 54 spiegelbildlich angeordnet wird, die in Figur 16 links gezeigte Seite an den Vorsprüngen 46 und 50 bzw. 48 und 52 des Halteprofils 20 (siehe Figur 15) anliegt.

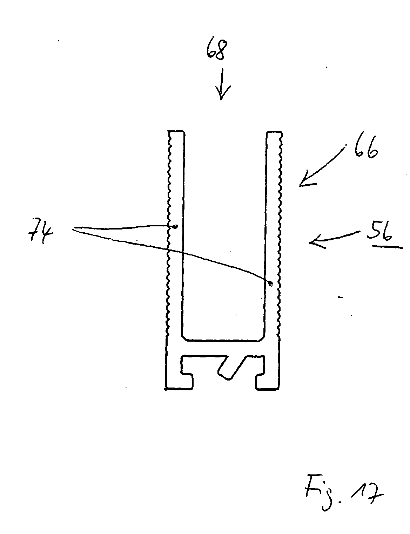

Schließlich zeigt Figur 17 eine Distanzbrücke 56 zur Anpassung an die Rahmenhöhe, wie sie auch in der Figur 14 gezeigt ist. Der untere Bereich der Distanzbrücke 54 ist auf das Halteprofil 20 aufklippsbar (siehe Figur 14). Oben weist die Distanzbrücke 56 einen U-förmigen Bereich 66 auf, dessen Schenkel 74 bedarfsweise verkürzt werden können, um ein Solarmodul mit einer größeren Rahmenhöhe montieren zu können.

Wie die vorangehende Beschreibung zeigt, ermöglichen die Halteprofile, Solarmodule mit unterschiedlichen Rahmenhöhen und/oder Rahmenlängen bzw. - breiten ohne zusätzliche Befestigungsmittel und damit auch ohne Werkzeug durch Einlegen in die Halteprofile und Klemmwirkung derselben zu fixieren.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 10: Montagesystem
- 12: Solarmodul
- 14: Schrägdach
- 16: vertikales Profil
- 18: Dachhaken
- 20: Halteprofil
- 22: Einschubblende
- 24: Dreieckrahmen
- 26: Fassade
- 28: Vertikalblende
- 30, 32: Schenkel
- 34: Steg
- 36, 38: Schenkel
- 40, 42: Aufnahmetasche
- 43: Ende
- 44: Ende
- 46, 48, 50, 52: Vorsprung
- 54, 56: Distanzbrücke
- 58: Endkappe
- 60, 62: Schraube
- 64: Rastblende
- 66: U-förmiger Bereich
- 68: offene Seite
- 70: Kabelrinne
- 74: Schenkel

## Patentansprüche

1. Montagesystem (10) für gerahmte Solarmodule (12) mit mindestens zwei sich horizontal erstreckenden, parallel zueinander angeordneten einteiligen Halteprofilen (20) zum Halten mindestens eines Solarmoduls (12) und mit Befestigungsmitteln zur Befestigung der Halteprofile (20) auf einem Dach oder an einer Fassade (26), wobei jedes Halteprofil (20) zwei in entgegengesetzten Richtungen offene Aufnahmetaschen (40, 42) aufweist, die zur Aufnahme je einer Kante des mindestens einen Solarmoduls (12) geeignet sind,
**dadurch gekennzeichnet, daß**
jedes Halteprofil (20) gestaltet ist, um in jeder Aufnahmetasche (40, 42) bedarfsweise die ortsfeste Anordnung einer Distanzbrücke (56) zur Anpassung an die Rahmenhöhe des jeweiligen Solarmoduls (12) zu ermöglichen.

2. Montagesystem (10) nach Anspruch 1, **dadurch gekennzeichnet, daß** jedes Halteprofil (20) im Querschnitt im wesentlichen I-förmig gestaltet ist, wobei die zur Befestigung des Halteprofils (20) vorgesehenen Schenkel (30, 32) des I länger als die an dem anderen Ende (44) des Stegs (34) befindlichen Schenkel (36, 38) sind.

3. Montagesystem (10) nach Anspruch 2, **dadurch gekennzeichnet, daß** der Steg (34) im Bereich seines von der Befestigungsseite abgewandten Endes (44) geschwächt ist.

4. Montagesystem (10) nach Anspruch 2 oder 3, **dadurch gekennzeichnet, daß** der Steg (34) zwischen den Schenkeln (30, 32, 36, 38) des I zu beiden Aufnahmetaschen (40, 42) hin je zwei in seiner Längserstreckung beabstandete Vorsprünge (46, 50 bzw. 48, 52) aufweist, zwischen denen eine jeweilige Distanzbrücke (54) zur Anpassung an die Rahmenlänge bzw. -breite des jeweiligen Solarmoduls (12) ortsfest positionierbar ist.

5. Montagesystem (10) nach einem der Ansprüche 2 bis 4, **dadurch gekennzeichnet, daß** jedes Paar von sich gegenüberliegenden Schenkeln (30, 36 bzw. 32, 38) des I zum Einschieben einer Einschubblende (22) in Längserstreckung des jeweiligen Halteprofils (20) gestaltet ist.

6. Montagesystem (10) nach einem der Ansprüche 2 bis 4, **dadurch gekennzeichnet, daß** jedes Paar von sich gegenüberliegenden Schenkeln (30, 36 bzw. 32, 38) des I zum Einrasten einer Rastblende (64) in Längserstreckung des jeweiligen Halteprofils (20) gestaltet ist.

7. Montagesystem (10) nach einem der Ansprüche 2 bis 6, **dadurch gekennzeichnet, daß** die im Querschnitt äußeren Enden (43) der längeren Schenkel (30, 32, 36, 38) des I zur Aufnahme einer Distanzbrücke (56) zur Anpassung an die Rahmenhöhe des jeweiligen Solarmoduls (12) gestaltet sind.

8. Montagesystem (10) nach einem der Ansprüche 4 bis 7, **dadurch gekennzeichnet, daß** mindestens zwei Distanzbrücken (54) zur Anpassung an die jeweilige Rahmenlänge bzw. -breite des Solarmoduls (12) vorgesehen sind.

9. Montagesystem (10) nach Anspruch 8, **dadurch gekennzeichnet, daß** die Distanzbrücken (54) einen rechteckigen Querschnitt aufweisen.

10. Montagesystem (10) nach Anspruch 8, **dadurch gekennzeichnet, daß** die Distanzbrücken (54) zur Anpassung an zwei unterschiedliche Rahmenlängen bzw. -breiten von Solarmodulen (12) vorgesehen sind.

11. Montagesystem (10) nach Anspruch 10, **dadurch gekennzeichnet, daß** die Distanzbrücken (54) in zwei zueinander spiegelbildlichen Anordnungen an dem jeweiligen Halteprofil (20) anbringbar sind.

12. Montagesystem (10) nach einem der Ansprüche 8 bis 11, **dadurch gekennzeichnet, daß** die Distanzbrücken (54) aus Kunststoff sind.

13. Montagesystem (10) nach einem der Ansprüche 8 bis 11, **dadurch gekennzeichnet, daß** die Distanzbrücken (54) aus Aluminium sind.

14. Montagesystem (10) nach einem der Ansprüche 8 bis 12, **dadurch gekennzeichnet, daß** die Distanzbrücken (54) aus Strangpreßprofilen hergestellt sind.

15. Montagesystem (10) nach einem der vorangehenden Ansprüche, **dadurch gekennzeichnet, daß** mindestens zwei Distanzbrücken (56) zur Anpassung an die Rahmenhöhe je Solarmodul (12) vorgesehen sind.

16. Montagesystem (10) nach einem der vorangehenden Ansprüche, **dadurch gekennzeichnet, daß** die Distanzbrücken (56) zur Anpassung an die Rahmenhöhe aufclipsbar sind.

17. Montagesystem (10) nach Anspruch 15 oder 16, **dadurch gekennzeichnet, daß** die Distanzbrücken (56) einen U-förmigen Bereich aufweisen, wobei die offene Seite (68) des U-förmigen Bereiches (66) bei eingesetztem Solarmodul selbigem zugewandt ist.

18. Montagesystem (10) nach einem der Ansprüche 15 bis 17, **dadurch gekennzeichnet, daß** die Distanzbrücken (56) zur Anpassung an die Rahmenhöhe aus Kunststoff sind.

19. Montagesystem (10) nach einem der Ansprüche 15 bis 17, **dadurch gekennzeichnet, daß** die Distanzbrücken (56) zur Anpassung an die Rahmenhöhe aus Aluminium sind.

20. Montagesystem (10) nach einem der Ansprüche 15 bis 18, **dadurch gekennzeichnet, daß** die Distanzbrücken (56) zur Anpassung an die Rahmenhöhe aus Strangpreßprofilen hergestellt sind.

21. Montagesystem (10) nach einem der vorangehenden Ansprüche, **dadurch gekennzeichnet, daß** für jedes Halteprofil (20) zwei seitliche Endkappen (58) vorgesehen sind, die lösbar mit dem jeweiligen Halteprofil (20) verbindbar sind.

22. Montagesystem (10) nach einem der vorangehenden Ansprüche, **dadurch gekennzeichnet, daß** die Halteprofile (20) in deren Längserstreckung mittels Verbindungsbolzen zu beiden Seiten verlängerbar sind.

23. Montagesystem (10) nach einem der vorangehenden Ansprüche, **dadurch gekennzeichnet, daß** die Halteprofile (20) aus Aluminium bestehen.

24. Montagesystem (10) nach einem der vorangehenden Ansprüche, **dadurch gekennzeichnet, daß** die Befestigungsmittel vertikale Profile (16) sind.

25. Montagesystem nach Anspruch 24, **dadurch gekennzeichnet, daß** jedes vertikale Profil (16) als Aufnahmeprofil für ein jeweiliges Halteprofil (20) mit mindestens einer integrierten Kabelrinne (70) ausgebildet ist.

26. Montagesystem (10) nach einem der Ansprüche 1 bis 23, **dadurch gekennzeichnet, daß** die Befestigungsmittel einen Dreieckrahmen (24) umfassen.

## Claims

1. Mounting system (10) for framed solar modules (12), with at least two single-part holding profiles (20), which extend horizontally and are arranged parallel to one another, for holding at least one solar module (12), and with fastening means for fastening the holding profiles (20) on a roof or on a façade (26), each holding profile (20) having two receiving pockets (40, 42) which are open in opposite directions and are suitable for each receiving one edge of the at least one solar module (12), **characterized in that** each holding profile (20) is designed in order to permit, in each receiving pocket (40, 42) as the need arises, the positionally fixed arrangement of a spacer bridge (56) for adaptation to the frame height of the particular solar module (12).

2. Mounting system (10) according to Claim 1, **characterized in that** each holding profile (20) is of essentially I-shaped design in cross section, with those limbs (30, 32) of the I which are provided for fastening the holding profile (20) being longer than the limbs (36, 38) situated at the other end (44) of the web (34).

3. Mounting system (10) according to Claim 2, **characterized in that** the web (34) is weakened in the region of its end (44) which faces away from the fastening side.

4. Mounting system (10) according to Claim 2 or 3, **characterized in that** the web (34) between the limbs (30, 32, 36, 38) of the I has, toward each of the two receiving pockets (40, 42), two projections (46, 50 and 48, 52, respectively) which are spaced apart in its longitudinal extent and between which a respective spacer bridge (54) can be positioned in a positionally fixed manner for adaptation to the frame length or width of the particular solar module (12).

5. Mounting system (10) according to one of Claims 2 to 4, **characterized in that** each pair of opposite limbs (30, 36 and 32, 38) of the I is designed for the insertion of a plug-in cover (22) in the longitudinal extent of the respective holding profile (20).

6. Mounting system (10) according to one of Claims 2 to 4, **characterized in that** each pair of opposite limbs (30, 36 or 32, 38) of the I is designed for the snapping-in of a latching cover (64) in the longitudinal extent of the respective holding profile (20).

7. Mounting system (10) according to one of Claims 2 to 6, **characterized in that** the cross-sectionally outer ends (43) of the longer limbs (30, 32, 36, 38) of the I are designed for receiving a spacer bridge (56) for adaptation to the frame height of the particular solar module (12).

8. Mounting system (10) according to one of Claims 4 to 7, **characterized in that** at least two spacer bridges (54) are provided for adaptation to the particular frame length or width of the solar module (12).

9. Mounting system (10) according to Claim 8, **characterized in that** the spacer bridges (54) have a rectangular cross section.

10. Mounting system (10) according to Claim 8, **characterized in that** the spacer bridges (54) are provided for adaptation to two different frame lengths or widths of solar modules (12).

11. Mounting system (10) according to Claim 10, **characterized in that** the spacer bridges (54) can be fitted on the respective holding profile (20) in two mirror-inverted arrangements with respect to each other.

12. Mounting system (10) according to one of Claims 8 to 11, **characterized in that** the spacer bridges (54) are made of plastic.

13. Mounting system (10) according to one of Claims 8 to 11, **characterized in that** the spacer bridges (54) are made of aluminium.

14. Mounting system (10) according to one of Claims 8 to 12, **characterized in that** the spacer bridges (54) are produced from extruded profiles.

15. Mounting system (10) according to one of the preceding claims, **characterized in that** at least two spacer bridges (56) for adaptation to the frame height are provided per solar module (12).

16. Mounting system (10) according to one of the preceding claims, **characterized in that** spacer bridges (56) for adaptation to the frame height can be clipped on.

17. Mounting system (10) according to Claim 15 or 16, **characterized in that** the spacer bridges (56) have a U-shaped region, with the open side (68) of the U-shaped region (66) facing the solar module when the same is inserted.

18. Mounting system (10) according to one of Claims 15 to 17, **characterized in that** the spacer bridges (56) for adaptation to the frame height are made of plastic.

19. Mounting system (10) according to one of Claims 15 to 17, **characterized in that** the spacer bridges (56) for adaptation to the frame height are made of aluminium.

20. Mounting system (10) according to one of Claims 15 to 18, **characterized in that** the spacer bridges (56) for adaptation to the frame height are produced from extruded profiles.

21. Mounting system (10) according to one of the preceding claims, **characterized in that** two lateral end caps (58) are provided for each holding profile (20) and can be connected releasably to the respective holding profile (20).

22. Mounting system (10) according to one of the preceding claims, **characterized in that** the holding profiles (20) can be extended in their longitudinal extent to both sides by means of connecting bolts.

23. Mounting system (10) according to one of the preceding claims, **characterized in that** the holding profiles (20) are composed of aluminium.

24. Mounting system (10) according to one of the preceding claims, **characterized in that** the fastening means are vertical profiles (16).

25. Mounting system (10) according to Claim 24, **characterized in that** each vertical profile (16) is designed as a receiving profile for a respective holding profile (20) with at least one integrated cable channel (70).

26. Mounting system (10) according to one of Claims 1 to 23, **characterized in that** the fastening means comprise a triangular frame (24).

## Revendications

1. Système (10) de montage pour des modules solaires (12) munis de cadre avec au moins deux profilés (20) de maintien d'un seul tenant disposés de manière parallèle l'un à l'autre, qui s'étendent horizontalement de sorte à maintenir au moins un module (12) solaire et avec des moyens de fixation servant à fixer les profilés (20) de maintien sur un toit ou sur une façade (26), chaque profilé (20) de maintien présentant deux poches (40, 42) réceptrices ouvertes dans des directions opposées, lesquelles sont appropriées pour que chacune d'entre elles reçoive un bord de l'au moins un module (12) solaire,
**caractérisé en ce que**
chaque profilé (20) de maintien est conçu de sorte à permettre de placer, si besoin, un pont (56) d'écartement de manière fixe dans chaque poche (40, 42) réceptrice, lequel pouvant s'ajuster à la hauteur du cadre du module (12) solaire respectif.

2. Système (10) de montage selon la revendication 1, **caractérisé en ce que** chaque profilé (20) de maintien est conçu en section dans une forme essentiellement en I, les branches (30, 32) prévues pour la fixation du profilé de maintien (20) du I étant plus longues que les branches (36, 38) se trouvant sur l'autre extrémité (44) de l'entretoise (34).

3. Système (10) de montage selon la revendication 2, **caractérisé en ce que** l'entretoise (34) est fragilisée dans la région de ses extrémités (44) écartées de la paroi de fixation.

4. Système (10) de montage selon la revendication 2 ou 3, **caractérisé en ce que** l'entretoise (34) entre les branches (30, 32, 36, 38) du I présente à chaque fois deux parties en saillie (46, 50 ou bien 48, 52) allant jusqu'aux deux poches (40, 42) réceptrices qui sont éloignées dans le sens longitudinal de celle-ci, entre lesquelles il est possible de positionner un pont (54) d'écartement respectif de manière fixe pouvant s'ajuster à la longueur ou à la largeur du cadre du module (12) solaire respectif.

5. Système (10) de montage selon l'une quelconque des revendications 2 à 4, **caractérisé en ce que** chaque paire de branches (30, 36 ou bien 32, 38) du I se faisant face est conçue de sorte qu'une plaque (22) sur glissières puisse coulisser dans l'étendue longitudinale du profilé (20) de maintien respectif.

6. Système (10) de montage selon l'une quelconque des revendications 2 à 4, **caractérisé en ce que** chaque paire de branches (30, 36 ou bien 32, 38) du I qui se font face est conçue de sorte qu'une plaque (64) de crantage puisse s'enclencher dans l'étendue longitudinale du profilé (20) de maintien respectif.

7. Système (10) de montage selon l'une quelconque des revendications 2 à 6, **caractérisé en ce que** les extrémités (43) extérieures en coupe transversale des plus longues branches (30, 32, 36, 38) du I sont conçues pour recevoir un pont (56) d'écartement pouvant s'ajuster à la hauteur du cadre du module (12) solaire respectif.

8. Système (10) de montage selon l'une quelconque des revendications 4 à 7, **caractérisé en ce qu'**au moins deux ponts (54) d'écartement sont prévus pour pouvoir s'ajuster à la longueur respective ou bien à la largeur respective du cadre du module (12) solaire.

9. Système (10) de montage selon la revendication 8, **caractérisé en ce que** les ponts (54) d'écartement présentent une section rectangulaire.

10. Système (10) de montage selon la revendication 8, **caractérisé en ce que** les ponts (54) d'écartement sont prévus pour pouvoir s'ajuster aux deux longueurs ou bien aux deux largeurs distinctes de cadre des modules (12) solaires.

11. Système (10) de montage selon la revendication 10, **caractérisé en ce que** les ponts (54) d'écartement peuvent être montés dans deux configurations inverses l'un par rapport à l'autre sur le profilé (20) de maintien respectif.

12. Système (10) de montage selon l'une quelconque des revendications 8 à 11, **caractérisé en ce que** les ponts (54) d'écartement sont fabriqués en matière plastique.

13. Système (10) de montage selon l'une quelconque des revendications 8 à 11, **caractérisé en ce que** les ponts (54) d'écartement sont fabriqués en aluminium.

14. Système (10) de montage selon l'une quelconque des revendications 8 à 12, **caractérisé en ce que** les ponts (54) d'écartement sont fabriqués à partir de profilés extrudés.

15. Système (10) de montage selon l'une quelconque des revendications précédentes, **caractérisé en ce qu'**au moins deux ponts (56) d'écartement sont prévus de sorte à pouvoir s'ajuster à la hauteur de cadre de chaque module (12) solaire.

16. Système (10) de montage selon l'une quelconque des revendications précédentes, **caractérisé en ce que** les ponts (56) d'écartement peuvent s'enclipser pour pouvoir s'ajuster à la hauteur du cadre.

17. Système (10) de montage selon la revendication 15 ou 16, **caractérisé en ce que** les ponts (56) d'écartement présentent une région en forme de U, la paroi (68) ouverte de la zone (66) en forme de U étant orientée en direction du même module solaire inséré.

18. Système (10) de montage selon l'une quelconque des revendications 15 à 17, **caractérisé en ce que** les ponts (56) d'écartement prévus pour s'ajuster à la hauteur du cadre sont fabriqués en matière plastique.

19. Système (10) de montage selon l'une quelconque des revendications 15 à 17, **caractérisé en ce que** les ponts (56) d'écartement prévus pour s'ajuster à la hauteur du cadre sont fabriqués en aluminium.

20. Système (10) de montage selon l'une quelconque des revendications 15 à 18, **caractérisé en ce que** les ponts (56) d'écartement conçus pour pouvoir s'ajuster à la hauteur du cadre sont fabriqués à partir de profilés extrudés.

21. Système (10) de montage selon l'une quelconque des revendications précédentes, **caractérisé en ce que** deux capuchons (58) d'extrémité latéraux sont prévus pour chaque profilé (20) de maintien, lesquels peuvent être reliés de manière amovible au profilé (20) de maintien respectif.

22. Système (10) de montage selon l'une quelconque des revendications précédentes, **caractérisé en ce que** les profilés (20) de maintien peuvent être rallongés dans leur étendue longitudinale au moyen de boulons de liaison prévus des deux côtés.

23. Système (10) de montage selon l'une quelconque des revendications précédentes, **caractérisé en ce que** les profilés (20) de maintien sont fabriqués en aluminium.

24. Système (10) de montage selon l'une quelconque des revendications précédentes, **caractérisé en ce que** les moyens de fixation sont des profilés (16) verticaux.

25. Système de montage selon la revendication 24, **caractérisé en ce que** chaque profil (16) vertical en tant que profilé récepteur pour un profilé (20) de maintien respectif est conçu avec au moins une goulotte (70) de câble intégrée.

26. Système (10) de montage selon l'une quelconque des revendications 1 à 23, **caractérisé en ce que** les moyens de fixation comprennent un cadre (24) triangulaire.
